# EUROPÄISCHE PATENTSCHRIFT

(11) **EP 2 885 605 B1**
(45) Veröffentlichungstag und Bekanntmachung des Hinweises auf die Patenterteilung: **19.05.2021**
(21) Anmeldenummer: 13766225.0
(22) Anmeldetag: 20.08.2013
(51) Int. Cl.: G01B 21/04, G01B 11/24

(54) **VERFAHREN UND VORRICHTUNG ZUR HOCHPRÄZISEN VERMESSUNG VON OBERFLÄCHEN**
METHOD AND DEVICE FOR HIGHLY-PRECISE MEASUREMENT OF SURFACES
PROCÉDÉ ET DISPOSITIF POUR LE MESURAGE DE HAUTE PRÉCISION DE SURFACES

(30) Priorität: 20.08.2012 DE 102012017015
(43) Veröffentlichungstag der Anmeldung: 24.06.2015
(73) Patentinhaber: Taylor Hobson, Leicester, LE4 9JQ (GB)
(72) Erfinder: AM WEG, Christian, 63225 Langen (DE); MAY, Thilo, 64283 Darmstadt (DE); NICOLAUS, Ralf, 64293 Darmstadt (DE); PETTER, Jürgen, 64347 Griesheim (DE); BERGER, Gernot, 65187 Wiesbaden (DE)
(74) Vertreter: Weilnau, Carsten
(86) Internationale Anmeldenummer: PCT/EP2013/002500
(87) Internationale Veröffentlichungsnummer: WO 2014/029495

(56) Entgegenhaltungen:
- DE-A1-102007 024 197
- DE-A1-102011 011 065
- DE-T2-602004 004 916
- US-A- 5 604 593

## Beschreibung

Die vorliegende Erfindung betrifft ein Verfahren sowie eine Vorrichtung zur hochpräzisen Vermessung der Topologie bzw. der Oberfläche eines beliebigen Objekts auf der Grundlage einer bevorzugt optischen, berührungslosen Abtastung des Objekts.

### Stand der Technik

Zur Qualitätssicherung als auch zur Überwachung von industriellen Herstellungsprozessen, insbesondere im Bereich der Feinwerktechnik, Optik sowie in der Fertigungstechnik optischer, mechanischer und elektrischer Mikrostrukturen besteht ein wachsender Bedarf hinsichtlich einer möglichst hochauflösenden und präzisen Vermessung von Werkstück-Oberflächen.

So ist beispielsweise aus der DE 10 2008 033 942 B3 ein auf dem Prinzip der Mehrwellenlängen-Interferometrie operierender Abstandssensor bekannt, welcher mehrere Laserlichtquellen verwendet, deren emittierte Wellenlängen im optischen Telekommunikationsbereich zwischen 1520 nm und 1630 nm liegen. Die Signale der hierbei verwendeten Laser werden durch Multiplexer in einer gemeinsamen Faser zusammengeführt und zu einem Mehrwellenlängen-Sensorkopf geleitet. Ein solches Mehrwellenlängen-Abstandsmessverfahren ermöglicht prinzipiell eine interferometrische Abtastung von Topologien und Oberflächen beliebiger Objekte in Reflexionsgeometrie, wobei mittels des Mehrwellenlängen-Verfahrens ein vergleichsweise großer, eindeutig zuordenbarer Messbereich bereitgestellt und darüber hinaus eine Messgenauigkeit im Nanometer- bzw. sogar im Subnanometerbereich erreicht werden kann.

Ferner ist aus der DE 60 2004 004 916 T2 eine optische Oberflächen-Messvorrichtung bekannt, bei welcher ein konturabtastender Abstandssensor im Wesentlichen orthogonal zu einer zu messenden Oberfläche platziert wird. Der Abstandssensor ist dabei auf einer drehbaren Vorrichtung platziert, welche selbst auf einer Plattform angeordnet ist, die gegenüber einem Messrahmen beweglich ist. Ferner ist auf der den Abstandssensor aufnehmenden Vorrichtung eine Messoberfläche vorgesehen, deren Abstand zum Messrahmen mittels einer Einrichtung zur kontaktlosen Abstandsmessung gemessen wird.

Aus der DE 10 2007 024 197 A1 sind eine Vorrichtung und ein Verfahren zur Formmessung von Freiform-Flächen bekannt.

Bei derartigen, etwa in einer Scanbewegung die Oberfläche eines Objektes berührungslos abtastenden Sensors spielt die Bewegung und die Positioniergenauigkeit des Sensors gegnüber dem zu vermessenden Objekt eine entscheidende Rolle.

Um den Abstand zwischen dem Abstandssensor und der zu vermessenden Oberfläche präzise ermitteln zu können, muss der Sensor im Wesentlichen orthogonal zur zu vermessenden Oberfläche ausgerichtet sein und seine Ausrichtung entsprechend der Kontur des zu vermessenden Objekts anpassen. Für diese Anpassung sind sowohl Translations- als auch Drehbewegungen des Sensors durchzuführen.

Bei einer geforderten Messgenauigkeit im Nanometer- oder Subnanometerbereich bewirkt eine Drehung des Sensors ferner auch stets eine nicht zu vernachlässigende translatorische Verschiebung des Sensors gegenüber der den Sensor tragenden Halterung oder Plattform. So muss das Messsignal des Sensors zumindest um die durch die Drehbewegung des Sensors verursachte Positionsverschiebung des Sensors korrigiert werden. Die mechanischen Toleranzen des Sensor-Lagers verursachen nicht reproduzierbare Positionsveränderungen des Sensors in unterschiedlichen Winkelstellungen. Es ist daher erforderlich, die Position des Sensors für jede mögliche Ausrichtung des Sensors präzise zu bestimmen.

Derzeit bekannte Verfahren und Vorrichtungen zur hochpräzisen Vermessung von Oberflächen sind bislang lediglich zur Vermessung von Oberflächen geeignet, die eine vorgegebene Symmetrie aufweisen. Die Abtastung der gesamten Oberflächen des Objekts erfordert insoweit eine Drehung des Objekts etwa um seine Symmetrieachse. Auf diese Art und Weise kann zum Beispiel mittels eines lediglich in einer einzigen Ebene schwenkbar gelagerten Messkopfs oder Abstandssensors die gesamte Topologie der Oberfläche vermessen und erfasst werden. Für Objekte mit einer sogenannten Freiformoberfläche, die keiner vorgegebenen Symmetrie folgen, sind derartige Messkonzepte nicht geeignet.

### Aufgabe

Es ist daher Aufgabe der vorliegenden Erfindung, eine Vorrichtung zur Vermessung, insbesondere zur hochpräzisen Vermessung einer Freiformoberfläche eines Objekts bereitzustellen, wobei etwaige, zum Beispiel durch eine translatorische und/oder rotatorische Bewegung eines Sensorkopfs bedingte Positionsungenauigkeiten des Sensors in einfacher Art und Weise bestimmt und entsprechend kompensiert werden können. Die Messvorrichtung soll sich dabei durch einen möglichst einfachen, kompakten sowie vergleichsweise kostengünstig zu implementierenden Aufbau auszeichnen. Sie soll ferner möglichst widerstandsfähig gegenüber äußeren Störeinflüssen ausgebildet sein.

Erfindung und vorteilhafte Wirkungen

Diese Aufgabe wird mit einer Vorrichtung gemäß Patentanspruch 1 sowie mit einem Verfahren nach Patentanspruch 14 gelöst, wobei vorteilhafte Ausgestaltungen der Erfindung jeweils Gegenstand abhängiger Patentansprüche sind.

Die insoweit vorgesehene erfindungsgemäße Vorrichtung ist zur Vermessung zumindest eines Oerflächenabschnitts eines bevorzugt auf einem Träger gelagerten bzw. angeordneten Objekts ausgebildet. Das Objekt bzw. dessen Oberflächenabschnitt kann hierbei eine sogenannte Freiformfläche mit einer vergleichsweise unregelmäßigen und dementsprechend unsymmetrischen oder asymmetrischen Außenkontur aufweisen. Das zu vermessende Objekt kann hierbei zum Beispiel als ein sogenannter Off Axis Paraboloid ausgebildet sein oder ein Linsenarray aufweisen. Es sind aber auch Oberflächenformen vermessbar, die in zwei zueinander orthogonalen Richtungen bzw. Schnittebenen mittels polynomialer Terme beschrieben werden können und von der Form her einer Sattelfläche gleichen.

Die erfindungsgemäße Vorrichtung weist zumindest einen Halter auf. Am Halter sind ferner ein Referenzkörper sowie eine Abstandsmesseinrichtung angeordnet, wobei die Abstandsmesseinrichtung bezüglich einer ersten Achse als auch bezüglich einer zweiten Achse schwenkbar am Halter gelagert ist. Erste und zweite Achsen verlaufen hierbei in unterschiedlichen Richtungen bzw. in unterschiedlichen Ebenen. Sie können aber auch in einer gemeinsamen Ebene liegen und insoweit eine Achsebene bilden.

Mittels der schwenkbaren Lagerung der Abstandsmesseinrichtung bezüglich zumindest zweier Achsen kann diese in nahezu beliebigen Ausrichtungen gegenüber dem Halter bzw. gegenüber dem Träger und dem daran angeordneten Objekt ausgerichtet werden. Hierdurch wird insbesondere die Vermessung einer Freiformoberfläche des Objekts ermöglicht, indem die entweder taktil oder berührungslos, bevorzugt optisch reflektierend ausgelegte Abstandsmesseinrichtung jeweils annähernd orthogonal zu einem ersten, auf dem zu vermessenden Oberflächenabschnitt befindlichen Punkt ausgerichtet werden kann.

Um insbesondere für die optische und berührungslose Abtastung des Oberflächenabschnitts eine orthogonale Ausrichtung der Abstandsmesseinrichtung zum jeweils zu vermessenden Punkt des Oberflächenabschnitts bereitstellen zu können, ist die Abstandsmesseinrichtung einerseits nahezu beliebig am Halter schwenkbar angeordnet, während der Halter selbst beliebig relativ zum Objekt bzw. relativ zum Träger positionierbar ist. Auf diese Art und Weise können sämtlichen abzutastenden Punkte des Oberflächenabschnitts aus unterschiedlichen Richtungen abgetastet werden. Es spielt hierbei keine Rolle, ob der Halter oder das Objekt beweglich gelagert ist. Entscheidend ist vor allem eine Relativbeweglichkeit von Halter und Objekt zueinander.

Die jeweilige Abtastrichtung ist hierbei durch die Kontur desjenigen Oberflächenabschnitts, welcher den gerade zu vermessenden Punkt aufweist vorgegeben. Insbesondere bei der optischen und berührungslosen sowie reflektierenden Vermessung des Oberflächenabschnitts ist es erforderlich, dass ein vom entsprechenden Oberflächenabschnitt zu reflektierender Messstrahl in etwa senkrecht auf den Oberflächenabschnitt auftrifft. Da bei einer zu vermessenden Freiformfläche der zu vermessende Oberflächenabschnitt des Objekts eine nahezu beliebige Kontur aufweisen kann, ist es erforderlich, sämtliche abzutastende Punkte des Freiformoberflächenabschnitts aus sämtlichen denkbaren, der jeweiligen Krümmung des abzutastenden Oberflächenabschnitts entsprechenden Messrichtungen abzutasten.

Indem die erste und die zweite Achse nicht parallel, sondern etwa senkrecht oder unter einem vorgegebenen Winkel zueinander ausgerichtet sind, können beliebige Abtastrichtungen für die Abstandsmesseinrichtung bereitgestellt werden.

Die Abstandsmesseinrichtung ist ferner dazu ausgebildet, einen ersten Abstand zu einem ersten Punkt des zu vermessenden Oberflächenabschnitts des Objekts als auch einen zweiten Abstand zu einem hiermit korrespondierenden zweiten Punkt des Referenzkörpers zu bestimmen. Der mittels der Abstandsmesseinrichtung zu ermittelnde erste Abstand stellt das eigentliche Messsignal dar, während anhand des gemessenen zweiten Abstands eine etwa rotationsbedingte Relativverschiebung zwischen der Abstandsmesseinrichtung und dem, ebenfalls am beweglichen Halter angeordneten, Referenzkörper ermittelt werden kann. Anhand des zu messenden zweiten Abstands kann insoweit eine Abstandskorrektur für den gemessenen ersten Abstand erfolgen.

Eine etwa durch die Drehbewegung der Abstandsmesseinrichtung hervorgerufene, nicht reproduzierbare Verschiebung eines dort vorgesehenen Abstandssensors und eine daraus resultierende Verfälschung der Messwerte kann durch die Bestimmung des zweiten Abstands gegenüber einem, hinsichtlich seiner Kontur und Position bekannten Referenzkörper kompensiert werden. Ein Offset zwischen einer Drehachse und einer Messachse der Abstandsmesseinrichtung kann durch Ermittlung der ersten und zweiten Abstände ermittelt sowie rechnerisch kompensiert werden.

In vorteilhafter Ausgestaltung weist die Vorrichtung einen Träger auf, welcher zur definierten Aufnahme und Lagerung des Objektes dient. Der Träger kann hierbei einen Referenzrahmen bzw. eine Referenzstruktur bereitstellen, bezüglich welcher einzelne gemessene Abstände untereinander verglichen werden können.

Es ist hierbei insbesondere eine relative Beweglichkeit von Träger und Halter, bzw. von Objekt und Halter zueinander vorgesehen. Von Vorteil ist der Halter gegenüber dem bevorzugt ortsfesten Träger beweglich ausgebildet. Es ist aber auch denkbar, dass das Objekt nicht direkt sondern nur über eine Verschiebeeinheit am Träger anordenbar ist. Insoweit kann eine Relativbewegung von Objekt und Halter auch bei ortsfixiertem Halter und einer beweglichen Lagerung des Objekts am Träger verwirklicht werden.

Nach einer weiteren vorteilhaften Ausgestaltung weist die Vorrichtung zumindest ein, bevorzugt mehrere Referenzobjekte auf, mittels derer die Position des beweglichen Halters bestimmbar ist. Hierzu ist insbesondere vorgesehen, dass eine Relativposition des Halters zum zumindest einen Referenzobjekt mit einer Anzahl weiterer abstandsmessender Positionssensoren ermittelbar ist, um letztlich die Position der Abstandsmesseinrichtung gegenüber dem Referenzobjekt bestimmen zu können. Die Position des zumindest einen Referenzobjekts gegenüber dem Träger ist hierbei als bekannt vorauszusetzen, sodass aus einer Abstandsbestimmung zwischen dem Referenzobjekt und dem Halter auch die Position des Halters, bzw. der Abstandsmesseinrichtung bezüglich des Trägers und des daran anordenbaren Objekts bestimmbar ist.

Nach einer bevorzugten Weiterbildung weist die am beweglichen Halter angeordnete Abstandsmesseinrichtung einen dem zu vermessenden Objekt zugewandten ersten Abstandssensor und einen zweiten, dem Referenzkörper zugewandten Abstandssensor auf. Der erste Abstandssensor dient einer Abstandsmessung zwischen Abstandsmesseinrichtung und zu vermessendem Objekt, während der zweite Abstandssensor zur Bestimmung des Abstandes der Abstandsmesseinrichtung bzw. des ersten Abstandssensors relativ zum Referenzkörper dient. Die Position des Halters wiederum kann mittels zumindest eines, bevorzugt mittels zweier oder weiter bevorzugt mittels dreier, in unterschiedlichen Richtungen ausgerichteter Sensoren gegenüber dem zumindest einen, bevorzugt gegenüber zwei, weiter bevorzugt gegenüber zumindest drei ortsfesten Referenzobjekten bestimmt werden.

Nach einer weiteren bevorzugten Ausgestaltung sind der erste und der zweite Abstandssensor zueinander lagefixiert. Erster und zweiter Abstandssensor können eine fixe aber definierte Position sowie Ausrichtung zueinander einnehmen, sodass für jede denkbare Ausrichtung des ersten Abstandssensors der zweite Abstandssensor ein durch die Drehung bzw. durch das Verschwenken des ersten Abstandssensors bedingte Positionsveränderung durch eine definierte und vorab kalibrierte Korrekturmessung gegenüber dem Referenzkörper kompensieren kann.

Von Vorteil sind der erste und der zweite Abstandssensor im Wesentlichen diametral entgegengesetzt zueinander ausgerichtet. Während der erste Abstandssensor zum Objekt hin zeigt und einen ersten Abstand zum ersten, auf dem Objekt befindlichen Punkt bestimmen kann, dient der zweite, entgegen der eigentlichen Messrichtung ausgerichtete Abstandssensor einer Korrekturmessung in Bezug auf den Referenzkörper.

Der Referenzkörper ist hierbei insbesondere drehfest am Halter angeordnet, sodass mit jeder denkbaren Ausrichtung des ersten Abstandssensors, welcher durch entsprechende erste und zweite Winkel in Bezug auf erste und zweite Drehachsen eindeutig festlegbar ist, der zweite Abstandssensor der Abstandsmesseinrichtung ein entsprechendes Korrektursignal bestimmen kann, welches zur Kompensation schwenk- oder drehbedingter Positionsungenauigkeiten der Abstandsmesseinrichtung bzw. ihres ersten Abstandssensors dienen kann.

Nach einer weiteren vorteilhaften Ausgestaltung sind die Abstandssensoren der Abstandsmesseinrichtung zumindest innerhalb eines vorgegebenen, gedachten Kegelvolumens nahezu beliebig im Raum orientierbar oder beliebig ausrichtbar. Hierdurch kann erreicht werden, dass zumindest der erste, zum zu vermessenden Objekt hin ausgerichtete Abstandssensor für jeden auf dem Oberflächenabschnitt liegenden ersten Punkt nahezu orthogonal bzw. parallel zu dessen Flächennormale ausgerichtet werden kann.

Nach einer weiteren bevorzugten Ausgestaltung schneidet ferner eine gedachte Verbindungslinie des ersten Punkts und des zweiten Punkts einen Kreuzungspunkt der ersten und der zweiten Achse. Mit anderen Worten liegen die ersten und zweiten, bevorzugt diametral entgegengesetzt zueinander ausgerichteten Abstandssensoren der Abstandsmesseinrichtung auf der gedachten Verbindungslinie, welche sich vom ersten, auf der Objektoberfläche befindlichem Punkt zum zweiten, auf der Referenzfläche des Referenzkörpers befindlichen Punkt erstreckt. Indem ein Kreuzungspunkt von erster und zweiter Achse auf jener gedachten Verbindungslinie liegt, geht ein Verschwenken oder Drehen der Abstandsmesseinrichtung bezüglich der ersten und der zweiten Achse typischerweise mit einer reinen Verkippung von ersten und zweiten Abstandssensoren gegenüber der Referenzfläche und/oder dem zu vermessenden Objekt einher.

Erfindungsgemäß weist der Referenzkörper ferner eine auf die schwenkbare Beweglichkeit der Abstandsmesseinrichtung am Halter abgestimmte Referenzfläche auf. Die Referenzfläche ist hierbei von Vorteil derart ausgebildet, dass ein vom zweiten Abstandssensor emittierbares Messsignal von der Referenzfläche reflektiert und vom zweiten Abstandssensor wieder detektiert werden kann. Hierbei ist insbesondere vorgesehen, dass die Referenzfläche auf die bewegliche bzw. schwenkbare Lagerung des ihr zugewandten zweiten Abstandssensors ausgebildet ist, sodass in jeder denkbaren Orientierung oder Ausrichtung des zweiten Abstandssensors eine etwa für das optische Abtasten erforderliche Orthogonalitätsbedingung an der Referenzfläche gewahrt ist.

Hierbei ist erfindungsgemäß ferner vorgesehen, dass die Referenzfläche als ein im Wesentlichen sphärischer Hohlspiegel mit einer im Wesentlichen kugelsegmentartigen Geometrie ausgebildet ist. Ein gedachter Kugelmittelpunkt fällt hierbei von Vorteil im Wesentlichen mit der ersten und/oder mit der zweiten Achse zusammen. Es ist hierbei ferner denkbar, dass der Mittelpunkt des Kugelsegments mit einem Schnittpunkt von erster und zweiter Achse im Wesentlichen zusammenfällt.

Eine z.B. sphärische, elliptische oder anderweitig dreidimensionale, an die Beweglichkeit bzw. die optische Einkoppelcharakteristik der Abstandsmesseinrichtung angepasste Ausgestaltung der Referenzfläche bzw. des die Referenzfläche aufweisenden Referenzkörpers ist erforderlich, um in jeglicher denkbaren Ausrichtung der Abstandsmesseinrichtung ein Korrektursignal für die schwenk- oder drehbedingte Positionsabweichung der Abstandsmesseinrichtung bereitstellen zu können.

Es kann hierbei nach einer vorteilhaften Ausgestaltung insbesondere vorgesehen werden, dass die Abstandsmesseinrichtung über zumindest drei, bevorzugt über zumindest sechs lage- bzw. längenveränderliche Aufhängungen am Halter angeordnet ist. Die einzelnen Aufhängungen können hierbei etwa über den Außenumfang der Abstandsmesseinrichtung verteilt angeordnet sein, sodass durch ein gezieltes Ausrichten und Umorientieren bzw. durch eine Schwenken einer einzelnen oder mehrerer Aufhängungen insgesamt eine Schwenk- bzw. Drehbewegung der Abstandsmesseinrichtung initiiert werden kann. Bei einer derartigen, in etwa einem sogenannten Hexapod entsprechenden Ausgestaltung können, je nach Konfiguration der lage- oder längenveränderlichen Aufhängungen nahezu beliebige virtuelle Drehachsen realisiert werden.

Insbesondere kann durch ein Verkürzen einer Aufhängung bei gleichzeitigem Verlängern einer anderen Aufhängung eine Drehbewegung bezüglich einer festen Achse verwirklicht werden. Im Sinne der vorliegenden Erfindung können die genannten ersten und zweiten Achsen auch positionsveränderlich am Halter ausgebildet sein. Falls sich durch eine Längenveränderung einer Aufhängung nicht nur die Ausrichtung, sondern auch der Abstand des zweiten Abstandssensors gegenüber der Referenzfläche ändert, so spielt dies für die Auswertung des Messsignals des ersten Abstandssensors fast keine Rolle, da für die Bestimmung des Abstands zum ersten Punkt auf der Objektoberfläche z.B. eine Summen- oder Differenzenbildung der von erstem und zweitem Abstandssensor generierbare Signale zur absoluten Abstandsmessung herangezogen wird.

Eine etwa durch die Dreh- oder Schwenkbewegung der Abstandsmesseinrichtung bedingte Positionsveränderung gegenüber dem Halter kann ja gerade mittels der Abstandsmessung gegenüber der am Referenzkörper ausgebildeten Referenzflächen kompensiert werden.

Ferner ist nach einer weiteren Ausgestaltung vorgesehen, dass die Abstandsmesseinrichtung über ein um die zweite Achse drehbar an einem Ausleger angeordnetes Lager am Halter angeordnet ist. Das die zweite Achse bildende oder aufnehmende Lager befindet sich hierbei bevorzugt im gedachten Mittelpunkt der kugelsegmentartigen Geometrie der etwa als sphärische Hohlkugel ausgebildeten Referenzfläche des Referenzkörpers. Der Ausleger, an welchem das Lager und somit auch die Abstandsmesseinrichtung drehbar angeordnet ist, weist hingegen eine vorgegebene Länge bzw. Geometrie auf, die eine weitgehend freie Drehbarkeit der Abstandsmesseinrichtung gegenüber dem Ausleger ermöglicht Bei einer derartigen, in etwa einer einem sogenannten Gimball entsprechenden Ausgestaltung, können, je nach Konfiguration der Aufhängungen, nahezu beliebige Ausrichtungen der Abstandsmesseinrichtung realisiert werden.

Nach einer weiteren bevorzugten Ausgestaltung ist der Ausleger selbst um die erste Achse drehbar am Halter gelagert. Erste und zweite Drehachsen können hierbei insbesondere orthogonal oder senkrecht zueinander ausgerichtet sein. Ferner ist denkbar und von Vorteil vorgesehen, dass sich die erste und die zweite Achse in einem wechselseitigen Anbindungspunkt von Ausleger und Lager schneiden.

Nach einer weiteren vorteilhaften Ausgestaltung ist ferner eine Steuereinheit vorgesehen, die dazu ausgebildet ist, den ersten Abstandssensor im Wesentlichen entlang der Flächennormalen des ersten Punkts des Oberflächenabschnitts des Objekts auszurichten. Die Steuereinheit dient hierbei bevorzugt einer weitgehend automatischen bzw. selbsttätigen Justage und Drehbewegung des ersten Abstandssensors derart, dass die von ihm emittierten optischen Signale vom Objekt bzw. von dessen Oberflächenabschnitt zurückreflektiert werden.

Bei einer reflektierenden Oberfläche des Objekts erfolgt eine Rückreflektion im Bereich um 180° gegenüber dem emittierten Signal. Je nach Sensorausgestaltung kann aber auch eine bis zu 3°, 5° oder 10° von der Oberflächennormalen des zu untersuchenden Oberflächenabschnitts abweichende Geometrie zur Bestimmung des Abstands nach wie vor ausreichend sein. Bei rauen oder streuenden Oberflächen können auch andere, hiervon abweichende Ausrichtungen des Sensors gegenüber der Flächennormalen des zu vermessenden Oberflächenabschnitts erforderlich werden.

In bevorzugter Ausgestaltung ist insbesondere vorgesehen, dass der bewegliche Halter mit seinem Referenzkörper und den daran schwenkbar bzw. drehbar angeordneten Abstandssensoren in einer scannenden Bewegung gegenüber dem Objekt bewegt wird bzw. bewegbar ist. Ein Abscannen des Objekts kann hierbei entsprechend einem Entlangtasten eines vom ersten Abstandssensor ausgesendeten ersten Messstrahls entlang des zu vermessenden Oberflächenabschnitts erfolgen. Im Zuge einer scannenden sukzessiven abtastenden Bewegung wird der relativ zum Träger bzw. zum Objekt bewegliche Halter zusammen mit seinem Referenzkörper bewegt. Alternativ kann natürlich auch vorgesehen sein, dass der Halter stationär ausgebildet ist, während der Träger zusammen mit dem daran angeordneten Objekt zur Vermessung desselben gegenüber dem Halter bewegt wird. Eine Relativbewegung von Halter und Objekt bzw. von Abstandsmesseinrichtung und Objekt kann vorgegebenen Bewegungsmustern folgen. So kann die Oberfläche des Objekts etwa linienförmig, mäanderartig oder auch spiralartig abgescannt werden.

Unabhängig davon, wie eine Relativbewegung zwischen Halter und Objekt realisiert ist, kann mittels der Abstandsmesseinrichtung mit ihren beiden bevorzugt diametral entgegengesetzt zueinander ausgerichteten Abstandssensoren jeweils ein Abstand zwischen dem Referenzkörper und der zu vermessenden Oberfläche des Objekts bestimmt werden. Aus einem Vergleich einer bevorzugt elektronischen Auswertung einer Vielzahl ermittelter Abstandsmesswerte kann schließlich auf die Kontur und die Oberflächenbeschaffenheit des vermessenen Objekts geschlossen werden.

Es erweist sich ferner als besonders vorteilhaft, dass der zweite, vom zweiten Abstandssensor ermittelbare Abstand zum Referenzkörper unmittelbar zur Korrektur des vom ersten Sensor ermittelbaren Abstandswertes verwendbar ist.

Schließlich ist nach einer weiteren bevorzugten Ausgestaltung vorgesehen, dass zumindest ein Positionssensor mit dem Halter gekoppelt ist, mittels welchem die räumliche Position des Halters in Bezug auf das zumindest eine Referenzobjekt bestimmbar ist. Es ist hierbei insbesondere vorgesehen, dass zumindest zwei, bevorzugt drei Positionssensoren mit dem Halter gekoppelt, insbesondere am Halter angeordnet sind und dass für jeden der bevorzugt drei Positionssensoren ein eigens hierfür ausgebildetes Referenzobjekt bereitgestellt bzw. vorgesehen ist. Die Lage und die Kontur des bei optischer Positionsbestimmung des Halters vorgesehenen Referenzobjekts kann präzise, etwa durch eine entsprechende Kalibrierung bestimmt werden.

Durch eine Positionsbestimmung des Halters gegenüber den zumindest einen oder gegenüber drei, im Raum verteilten Referenzobjekten kann die Position des Halters relativ zum zu den Referenzobjekten, mithin zu dem hiervon gebildeten Referenzsystem präzise ermittelt werden. Wenn ferner das zumindest eine Referenzobjekt in einer festgelegten geometrischen Beziehung zum Träger steht, etwa wenn das zumindest eine Referenzobjekt zum Träger und dem darauf anordenbaren Objekt lagefixierbar ist, kann durch eine etwa optische Bestimmung der Position des Halters in sämtlichen drei Raumrichtungen relativ zum Referenzobjekt die relative Position des Halters, seines Referenzkörpers sowie der daran ausgebildeten Referenzfläche bestimmt werden.

Aufbauend auf einer derartigen Grobbestimmung kann sodann mittels der Abstandsmesseinrichtung der tatsächliche Abstand zwischen der zu vermessenden Oberfläche des Objekts und der Abstandsmesseinrichtung insbesondere der Referenzfläche absolute präzise, etwa im Nano- oder sogar Subnanometerbereich bestimmt werden. Eine Topographie der zu vermessenden Oberfläche des Objekts kann hierbei aus zwei hochgenau bestimmbaren relativen Abständen ermittelt werden. Zum Einen kann der Abstand des Trägers gegenüber dem Halter und zum Anderen kann ein Abstand des Halters gegenüber dem Objekt bestimmt werden. Aus diesen relativen Abständen lässt sich schließlich die Oberfläche des Objekts in Bezug zu dem Träger setzen, sofern das Gesamtsystem zuvor mittels zumindest einem geeigneten Masterobjekt mit bekannten Abmessungen kalibriert wurde.

Die drei zuvor genannten Positionssensoren können bei dieser Ausgestaltung entweder am Halter oder aber außerhalb des Halters an dem zumindest einen oder an mehreren jeweils vorgesehenen Referenzobjekten angeordnet sein. Bei einer Anordnung der drei, etwa in die drei Raumrichtungen (x, y, z) ausgerichteten Positionssensoren am Halter ist vorgesehen, dass das zumindest eine Referenzobjekt drei den zu vermessenden Richtungen (x, y, z) entsprechende Spiegelflächen bereitstellt.

Jene Spiegelflächen sind hinsichtlich ihrer Konturen und Oberflächenbeschaffenheit vorab präzise zu erfassen, um die gesamte Messvorrichtung vor Durchführung einer Oberflächenmessprozedur eines Objekts zu kalibrieren. Sofern der Halter in sämtlichen drei Raumrichtungen gegenüber dem zumindest einen, bevorzugt gegenüber drei separaten Referenzobjekten, vor allem aber gegenüber dem Träger beweglich gelagert ist, wird eine derartige Kalibrierung erforderlich.

Nach einer Weiterbildung hiervon können ergänzend zu den drei Positionssensoren noch drei weitere Trägersensoren vorgesehen werden, mittels welchen die räumliche Position des Trägers in Bezug auf das zumindest eine Referenzobjekt und/oder in Bezug auf eine das Objekt tragende Verschiebeeinheit bestimmbar ist. Hierbei ist insbesondere vorgesehen, dass der das Objekt tragende Träger bzw. das Objekt selbst Gegenstand einer Bewegung gegenüber dem Halter bzw. gegenüber der daran angeordneten Abstandsmesseinrichtung sein kann. Wenn sowohl der Halter als auch das Objekt, bzw. eine das Objekt tragende Struktur, z.B. in Form des Trägers selbst oder in Form einer Verschiebeeinheit beweglich gelagert sind, ist lediglich darauf zu achten, dass in der Summe eine Relativbewegung von Objekt und Halter in sämtlichen drei Raumrichtungen zueinander realisierbar ist.

So kann zum Beispiel vorgesehen werden, dass der Halter lediglich in einer Raumrichtung, etwa orthogonal bzw. parallel zur Flächennormalen des Trägers beweglich gelagert ist, während der Träger etwa parallel zu seiner Trägerebene gegenüber außerhalb des Trägers liegenden Referenzobjekten beweglich gelagert ist.

Lediglich zu Kontrollzwecken, insbesondere ob der Träger bei einer Bewegung in der Trägerebene auch tatsächlich in jener verbleibt, wäre zum Beispiel an der dem Halter abgewandten Unterseite des Trägers ein z.B. zweidimensionale, der Bewegung des Trägers entsprechendes Referenzobjekt vorzusehen. Bei einer beweglichen Ausgestaltung des Trägers in der oder parallel zur Trägerebene kann für den Halter eine eindimensionale, etwa orthogonal oder senkrecht zur Trägerebene ausgerichtete translatorische Beweglichkeit vorgesehen werden.

Durch eine Aufteilung der drei Bewegungsfreiheitsgrade in die Bewegung von Halter und Träger kann insbesondere erreicht werden, dass für die Bestimmung der Relativpositionen zwischen dem auf dem Träger befindlichen Objekt und dem Halter nur ein einziges zweidimensional ausgebildetes Referenzobjekt erforderlich ist, während übrige Referenzobjekte für die verbleibenden Träger- und Positionssensoren in Form etwa eindimensionaler Referenzstreifen, oder Referenzstäbe ausgebildet werden können.

Die Reduzierung planar und zweidimensional ausgebildeter Referenzobjekte kann die Herstellungs- vor allem aber die Montage und Installationsarbeiten für eine derartige Vorrichtung erheblich reduzieren. Für eine positionsgetreue Kalibrierung der Vorrichtung gestaltet sich die Vermessung und Kalibriering der zur Bestimmung der Trägerposition ausgebildeten Positionssensoren als vergleichsweise aufwendig. Durch Reduzierung der Bewegung - bzw. Positionier-Freiheitsgrade von Halter und/oder Träger steigt zwar die Gesamtzahl der zu implementierenden Positions- und Trägersensoren. Die Kosten und der Herstellung, insbesondere aber der Montage- und Justieraufwand für einzelne Sensoren erweist sich in der Praxis aber als vorteilhaft im Vergleich zur Kalibrierung bzw. Referenzierung großflächiger, planar ausgebildeter Referenzobjekte.

Nach einer weiteren bevorzugten Ausgestaltung ist vorgesehen, dass sich die beiden Achsen, bezüglich welcher die Abstandsmesseinrichtung drehbar gelagert ist, zwischen einer geometrischen Mitte der beiden Abstandssensoren der Abstandsmesseinrichtung und dem zu vermessenden Objekt befinden. Hierdurch können sich insbesondere für ein scannendes Abtasten der Oberfläche des Objekts vorteilhafte Effekte ergeben. Eine zum Objekt hin gerichtete Verlagerung der Drehachsen kann die Verfahrstrecken des Halters verkürzen und die Scangeschwindigkeit effektiv erhöhen. Es erweist sich hierbei insbesondere als vorteilhaft, wenn die diversen, etwa zum Bewegen von Halter und Abstandsmesseinrichtung vorgesehenen Antriebe derart angesteuert werden, dass sich im Scannprozess sozusagen virtuelle Drehachsen ergeben, die außerhalb der Halters, mitunter auf der Oberfläche des Objekts liegen.

Insoweit wäre denkbar, die Abstandsmesseinrichtung nach Art einer Pivotachse derart zu verschwenken und/oder zur verfahren, dass die Abstandsmesseinrichtung bezüglich des ersten Punkts auf der Oberfläche des Objekts verschwenkbar ist.

Nach einem weiteren unabhängigen Aspekt ist schließlich ein Verfahren nach Anspruch 14 zur Vermessung zumindest eines Oberflächenabschnitts eines Objekts unter Verwendung der zuvor beschriebenen Vorrichtung vorgesehen. Hierbei werden das Objekt und ein Halter, an welchem ein Referenzkörper sowie eine bezüglich einer ersten Achse und bezüglich einer zweiten Achse schwenkbar gelagerte Abstandsmesseinrichtung angeordnet sind, in zumindest einer ersten Richtung (x, y, z) relativ zueinander bewegt und es wird die Abstandsmesseinrichtung (42) bezüglich beider Achsen verschwenkt, wobei ferner mittels der Abstandsmesseinrichtung ein erster Abstand zu einem ersten Punkt des Oberflächenabschnitts des Objekts und ein zweiter Abstand zu einem hiermit korrespondierenden zweiten Punkt des Referenzkörpers bestimmt wird.

Das Objekt wird dabei bevorzugt in einer berührungslos abtastenden Bewegung des Halters, etwa optisch abgescannt, bzw. mit einem auf die Oberfläche des Objekts fokussierten Messstrahls abgetastet.

Mittels eines relativ zu zumindest einem Referenzobjekt beweglichen Halters, an welchem ein Referenzkörper sowie eine Abstandsmesseinrichtung angeordnet ist, wird hierbei ein erster Abstand zu einem ersten auf dem Oberflächenabschnitt des Objekts befindlichen ersten Punkts und ein zweiter Abstand zu einem auf dem Referenzkörper befindlichen zweiten Punkt bestimmt. Zur Bestimmung der Abstände wird die Abstandsmesseinrichtung bezüglich einer ersten und bezüglich einer zweiten Achse am Halter verschwenkt.

Aus den beiden Abständen, welche mittels eines ersten, respektive eines zweiten Abstandssensors ermittelt werden, kann unter Kenntnis und vorhergiger oder gleichzeitiger Bestimmung der Position des Halters, des Referenzkörpers und/oder der Abstandsmesseinrichtung relativ zum Referenzobjekt der Abstand zwischen Abstandsmesseinrichtung bzw. zwischen Referenzkörper und dem zu vermessenden Oberflächenabschnitt präzise, das heißt bis hin zu einer Genauigkeit im Nanometerbereich bestimmt werden.

Durch Abtasten des Oberflächenabschnitts, etwa mittels einer scannenden oder am Oberflächenabschnitt in diversen Richtungen abtastenden Bewegung eines von der Abstandsmesseinrichtung ausgesendeten optischen Abtastsignals oder Abtaststrahls kann der gesamte Oberflächenabschnitt abgetastet und entsprechend vermessen werden.

Weitere Aspekte des Vermessungsverfahrens ergeben sich aus dem Aufbau und der Betriebsweise der zuvor beschriebenen Vorrichtung zur Vermessung des Oberflächenabschnitts. Insoweit geltend sämtliche in Bezug auf die Vorrichtung beschriebenen Eigenschaften, Merkmale und Wirkungsweisen auf gleichermaßen für das genannte Verfahren und umgekehrt.

### Kurzbeschreibung der Figuren

Weitere Ziele, Merkmale sowie vorteilhafte Anwendungsmöglichkeiten der Erfindung werden in der nachfolgenden Darstellung eines Ausführungsbeispiels näher erläutert. Hierbei bilden sämtliche in den Figuren dargestellte als auch im Text beschriebene Merkmale sowohl in Alleinstellung als auch in jeglicher sinnvollen Kombination untereinander den Gegenstand der Erfindung, solange die resultierenden Kombinationen unter den Schutzumfang der Erfindung fallen. Der Schutzumfang der Erfindung ist in den Ansprüchen definiert. Es zeigen:
- Fig. 1: eine stark vereinfache schematische Darstellung eines zu vermessenden Objekts mit einem etwa eine Freiformfläche aufweisenden Oberflächenabschnitt,
- Fig. 2: eine Prinzipdarstellung der Vorrichtung zur Vermessung des Oberflächenabschnitts nach einer ersten Ausgestaltung,
- Fig. 3: eine weitere Ausgestaltung der Vorrichtung in einer Prinzipdarstellung,
- Fig. 4: eine isolierte, schematische Darstellung eines nach Art eines Hexapods ausgebildeten Halters in einer ersten Konfiguration,
- Fig. 5: den Halter gemäß Fig. 4 in einer zweiten, verschwenkten Konfiguration,
- Fig. 6: eine schematische Darstellung des Halters in der x-y-Ebene betrachtet,
- Fig. 7: den Halter gemäß Fig. 6 in der y-z-Ebene betrachtet,
- Fig. 8: eine alternative Ausgestaltung eines Halters in der Art eines Gimballs mit einer an einem drehbaren Ausleger gelagerten Abstandsmesseinrichtung,
- Fig. 9: den Halter gemäß Fig. 8 in einer verdrehten oder verkippten Ausgestaltung,
- Fig. 10: den Halter nach Fig. 9 in einer weiteren, verdrehten Konfiguration,

- Fig. 11: eine schematische Darstellung des Halters der Fig. 8 bis 10 in der y-x-Ebene betrachtet,
- Fig. 12: eine Darstellung des Halters gemäß Fig. 11 in der y-z-Ebene,
- Fig. 13: eine schematische Darstellung der faseroptischen Kopplung der in Fig. 2 gezeigten Konfiguration der Vorrichtung,
- Fig. 14: eine schematische Darstellung der faseroptischen Kopplung der in Fig. 3 gezeigten Konfiguration der Vorrichtung,
- Fig. 15: eine modifizierte Anordnung der Abstandsmesseinrichtung,
- Fig. 16a: eine Prinzipdarstellung der Verfahrwege der Abstandsmesseinrichtung mit herkömmlicher Sensoranordnung, und
- Fig. 16b: eine Prinzipdarstellung der Verfahrwege der Abstandsmesseinrichtung mit einer in Messrichtung verschobenen Sensoranordnung.

### Detaillierte Beschreibung

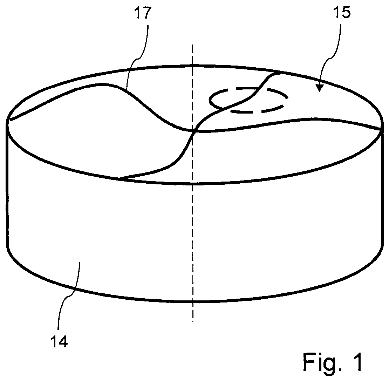

Das in Fig. 1 schematisch dargestellte Objekt 14 weist eine zu vermessende Oberfläche 15 mit einem etwa beliebig gekrümmten, eine sogenannten Freiformfläche darstellenden Oberflächenprofil 17 auf. Das Objekt 14 ist typischerweise als eine mit einer Freiformfläche versehene Linse oder Spiegel oder eine andere hiermit vergleichbare optische Komponente ausgebildet. Es ist aber auch denkbar, periodische Strukturen, wie z.B. ein Linsenarray zu vermessen. Die zu vermessende Oberfläche 15 weist insbesondere optisch reflektierende Eigenschaften auf, um eine präzise, berührungslose, auf Lichtreflektion basierende Vermessung und Charakterisierung durchführen zu können. Die Anwendung ist hierbei keineswegs auf die Vermessung optisch glatt reflektierender Oberflächen beschränkt sondern kann universell auch für zur Vermessung von vergleichsweise rauen Oberflächen Verwendung finden.

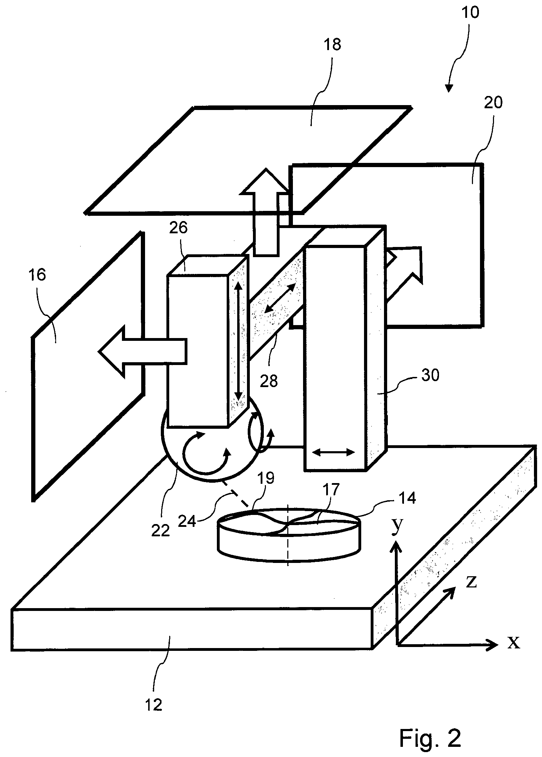

Die in Fig. 2 schematisch dargestellte Vorrichtung weist insoweit einen Träger 12 auf, auf welchem das zu vermessende Objekt 14 positioniert ist. Ferner sind in der Darstellung gemäß Fig. 2 drei separate Referenzobjekte 16, 18, 20, etwa in Form von planaren Spiegeln vorgesehen. Die Referenzobjekte 16, 18, 20 sind an definierten Positionen stationär, d.h. unbeweglich und positionsfixiert angeordnet und weisen eine, etwa durch vorherige Kalibrierung bekannte, in der Vorrichtung 10 hinterlegte Spiegelfläche auf.

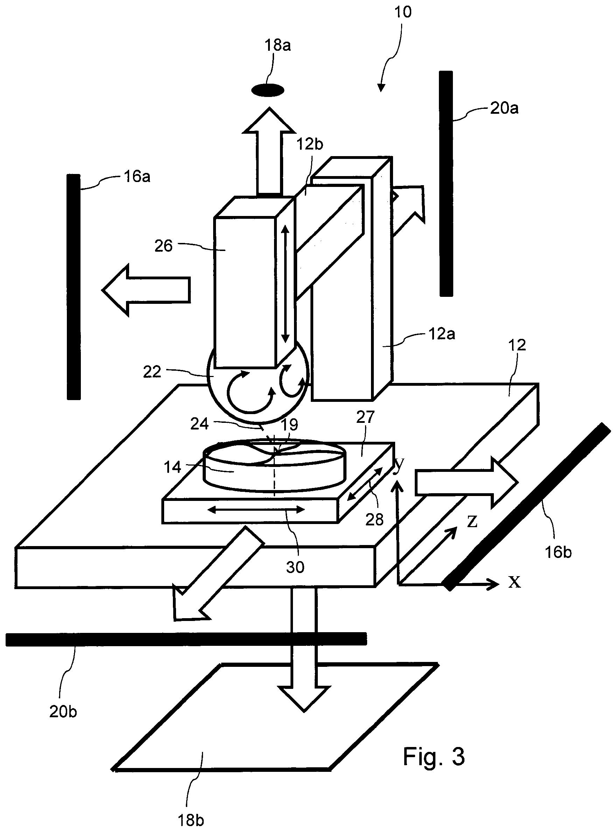

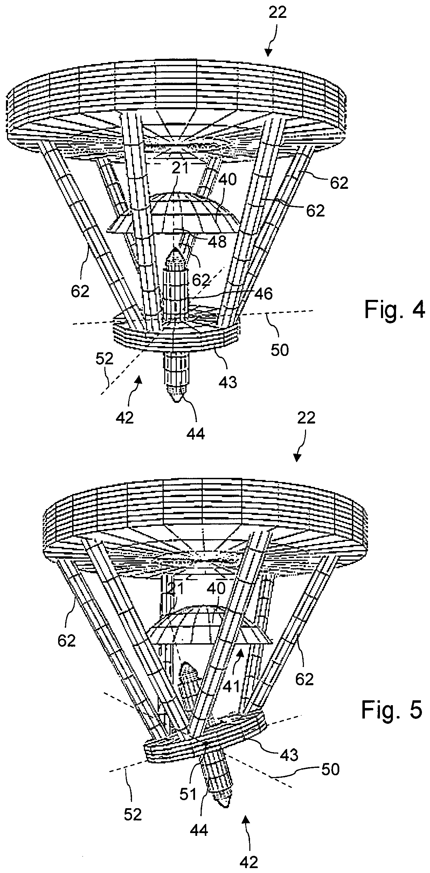

Zur Vermessung der Oberfläche 15 des Objekts 14 ist ferner ein in den Fig. 2 und 3 lediglich schematisiert dargestellter Halter 22 vorgesehen, an welchem ein Referenzkörper 40 sowie eine Abstandsmesseinrichtung 42 angeordnet sind. Die Ausgestaltungen gemäß der Fig. 4 bis 12 zeigen hier zwei unterschiedliche Optionen einer schwenkbar am Halter 22 angeordneten Abstandsmesseinrichtung 42.

Unabhängig davon ist der eine etwa dreidimensionale, sphärische Referenzfläche 41 bereitstellende Referenzkörper 40 als sphärischer Hohlspiegel ausgebildet. Die Abstandsmesseinrichtung 42 weist hingegen zwei diametral entgegengesetzt zueinander angeordnete sowie entgegengesetzt zueinander ausgerichtete Abstandssensoren, nämlich einen ersten Abstandssensor 44 und einen zweiten Abstandssensor 46 auf.

Während der erste Abstandssensor 44 zur zu vermessenden Oberfläche 15 des Objekts hin ausgerichtet und bezogen auf in einen ersten Punkt 19 einen dementsprechenden ersten Abstand 24 zum Objekt 14 bestimmen kann, ist der zweite, in entgegengesetzter Richtung ausgerichtete Abstandssensor 46 zur Referenzfläche 41 des Referenzkörpers 40 hin ausgerichtet. Die Kontur der Referenzfläche 41 ist zur Kalibrierung der Messeinrichtung 10 präzise vorab zu bestimmen, insbesondere vermessen. Ihre Kontur und die einzelnen auf der Referenzfläche 41 abzutastenden zweiten Punkte 21 sind hinsichtlich ihrer Position bekannt und in einer Auswerte- oder Steuereinheit 70 hinterlegt.

Der erste Sensor 44 ist insoweit zur Bestimmung eines in Fig. 2 und 3 angedeuteten ersten Abstands 24 zu einem ersten, auf der Oberfläche 15 des Objekts 14 befindlichen Punkt 19 ausgebildet, während der zweite Abstandssensor 46 zur Bestimmung eines gegenüberliegenden zweiten Abstands 48 zu einem zweiten, auf der Referenzfläche 41 des Referenzkörpers 40 liegende Punkt 21 ausgebildet ist.

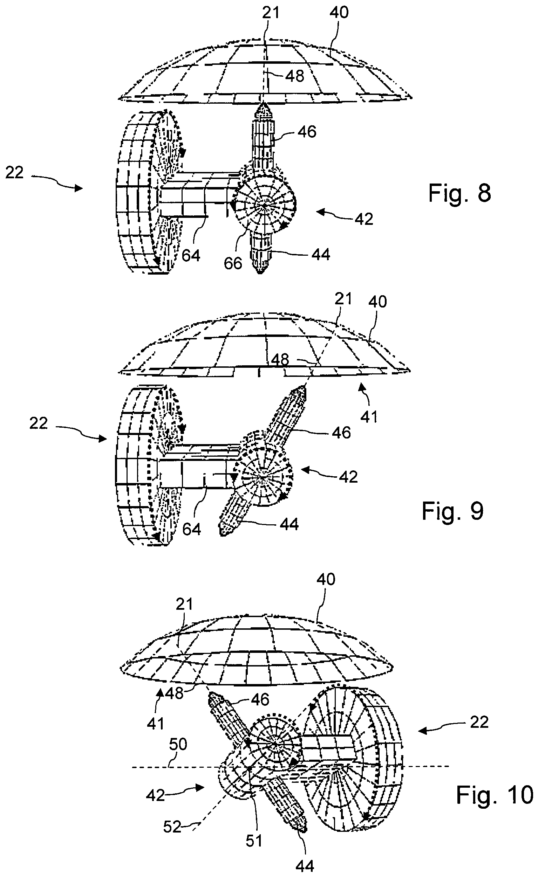

In beiden, in den Fig. 4 bis 7 und in den Fig. 8 bis 12 dargestellten unterschiedlichen Ausgestaltungen des Halters kann die Abstandsmesseinrichtung 42 bezüglich zumindest zweier unterschiedlicher Achsen, nämlich bezüglich einer ersten Achse 50 und bezüglich einer zweiten Achse 52 verschwenkt bzw. jeweils um einen vorgegebenen Mindestwinkel gedreht werden.

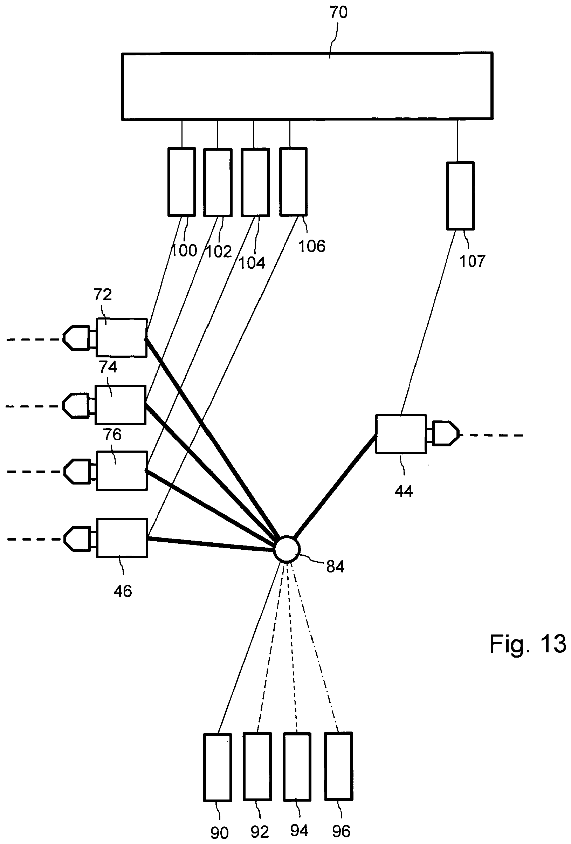

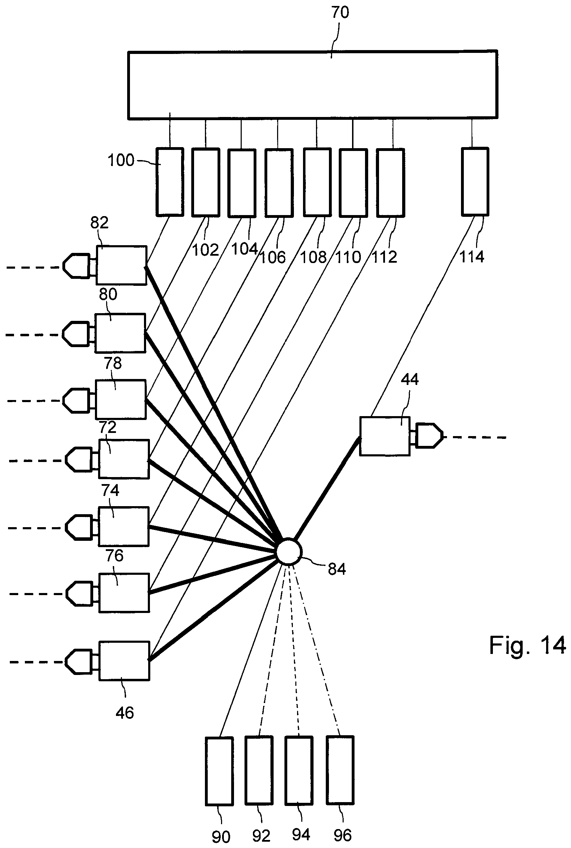

Der Halter 22 ist hierbei in der Ausgestaltung gemäß Fig. 2 über insgesamt drei einzelne Verschiebeeinheiten 26, 28, 30 frei im Raum, etwa bezüglich einer x-, y- und z-Richtung beweglich. Die Verschiebeeinheiten 26, 28, 30 können zum Beispiel als lineare Translationseinheiten, etwa mittels Linearmotoren ausgebildet sein. Unabhängig von einer deterministischen Verstellung bzw. Bewegung der Verschiebeeinheiten 26, 28, 30 kann mittels eigens hierfür am Halter 22 vorgesehenen, lediglich in der schematischen Darstellung gemäß der Fig. 13 und 14 dargestellten weiteren Positionssensoren 72, 74, 76 jeweils entsprechende, durch Pfeile in Figur 2 angedeutete Abstände zu den einzelnen Referenzobjekten 16, 18, 20 bestimmt werden. Die drei Sensoren 72, 74, 76 ermöglichen somit eine Positionsbestimmung des Halters 22 in Bezug auf die Referenzobjekte 16, 18, 20.

Zur Vermessung der Oberfläche 15 des Objekts 14 ist eine scannende bzw. abtastende Bewegung eines vom Halter 22 zur Oberfläche 15 gerichteten, in den Fig. 2 und 3, etwa durch den Abstand 24 verdeutlichten Messstrahls vorgesehen. Sowohl der zum Objekt 14 hin ausgerichtete erste Abstandssensor 44, als auch der zweite Abstandssensor 46 sowie die weiteren, zur Positionsbestimmung des Halters 22 gegenüber den Referenzobjekten 16, 18, 20 vorgesehenen Abstandssensoren 72, 74, 76 können jeweils in Form eines Mehrwellenlängen-Sensors ausgebildet sein, der zur Bestimmung eines absoluten Abstands zwischen dem jeweiligen Sensor und einem entsprechenden Punkt auf einer gegenüberliegenden Oberfläche des Objekts 14 bzw. des jeweiligen Referenzobjekts 16, 18, 20 ausgebildet ist.

Da die zu vermessende Oberfläche 15 als sogenannte Freiformfläche mit beliebiger Krümmung und beliebiger Oberflächentopologie 17 ausgebildet sein kann, ist es für ein optisches, punktweises Abscannen der Oberfläche 15 erforderlich, dass der zum Objekt 14 hin ausgerichtete Sensor 44, mithin der von ihm emittierte Messstrahl stets annähernd orthogonal bzw. senkrecht auf dem zu vermessenden Oberflächenabschnitt 15 des Objekts 14 steht. Das Wandern von einem Punkt 19 zu einem weiteren, etwa unmittelbar angrenzenden Messpunkt kann hierbei eine Translationsbewegung in x-, y- oder z-Richtung des Halters 22 gegenüber dem Objekt 14 als auch gegenüber den statisch angeordneten Referenzobjekten 16, 18, 20 erfordern.

Eine solche Verschiebebewegung des Halters 22 geht ferner typischerweise mit einem entsprechenden Verschwenken der Abstandsmesseinrichtung 42 ein. Von Vorteil wird die Bewegung des Halters 22 und die Ausrichtung der Abstandsmesseinrichtung 42 etwa durch Auswertung der vom Objekt 14 zurück reflektierten Intensität über eine rechnergestützte Steuereinrichtung 70 bestimmt und gesteuert.

Um eine Abstandsmessung im Submikrometer bzw. im Nanometerbereich bereitstellen zu können, müssen Positionsungenauigkeiten der Abstandsmesseinrichtung 42, welche durch deren schwenkbare Lagerung am Halter 22 bedingt sind, präzise erfasst und kompensiert werden. In dem der zweiten Abstandssensor 46 den sich in jeder Stellung der Abstandsmesseinrichtung 42 ergebenden Abstand zum Referenzkörper 40, mithin zu dessen Referenzfläche 41 bestimmt, ist die Abstandsmesseinrichtung 42 letztlich dazu ausgebildet, stets den lichten Abstand zwischen ausgewählten Punkten 21, 19 der Referenzfläche 41 und der Oberfläche 15 des zu vermessenden Objekts 14 zu bestimmen.

Dies kann insbesondere durch Summen- und/oder Differenzenbildung der Einzelabstände 24, 48 ermittelt werden. Die Abstandsmesseinrichtung 42 ist insbesondere annähernd in der Mitte einer gedachten Kugel angeordnet, von welcher der Referenzkörper 40 quasi ein Segment oder einen Teilbereich darstellt. Eine mit dem Kugelmittelpunkt zusammenfallende Lagerung der Abstandsmesseinrichtung 42 ist jedoch nicht zwingend erforderlich, solange die absolute Position sämtlicher vom zweiten Abstandssensor 46 auf der Referenzfläche 41 abtastbarer Punkte 21 bekannt und etwa durch eine vorherige Kalibrierung erfasst ist.

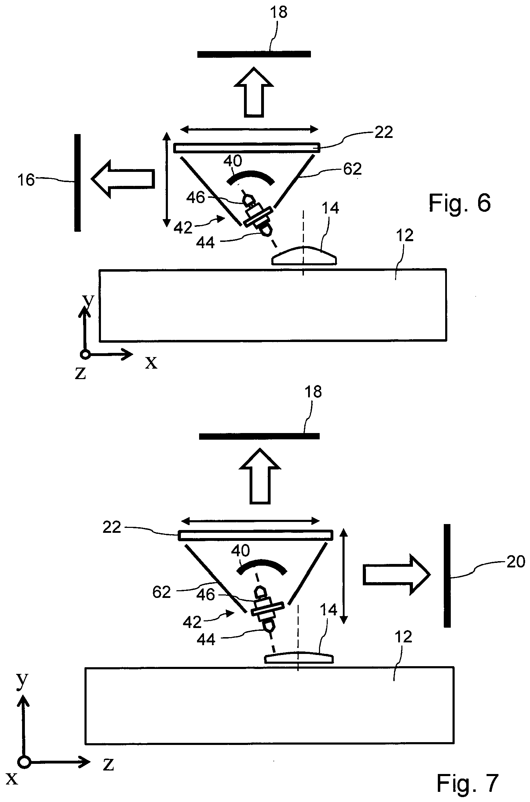

Die Ausgestaltung gemäß der Fig. 4 bis 7 zeigt eine Möglichkeit, die mit den beiden Abstandssensoren 44, 46 bestückte Abstandsmesseinrichtung 42 in nahezu beliebigen Richtungen, zumindest aber bezüglich einer ersten und einer zweiten Achse 50, 52 zu verschwenken. An der Abstandsmesseinrichtung 42 ist etwa ein tellerartig ausgebildetes Trägerelement 43 angeordnet, wobei das Trägerelement über insgesamt sechs in Umfangsrichtung am Trägerelement 43 angeordnete längenveränderliche Aufhängungen 62 am in den Fig. 4 und 5 oben dargestellte Halter 22 angeordnet ist. Durch eine mittels geeigneter Verstellmotoren zu erzielenden Umorientierung und sich einer hieraus ergebenden effektiven Längenveränderung einzelner Aufhängungen 62 kann das Trägerelement 43 zum Beispiel aus der in Fig. 4 gezeigten etwa horizontalen Ausrichtung, in eine in Fig. 5 gezeigte, leicht geneigte Ausrichtung verlagert werden. Wie ferner aus den Fig. 6 und 7 hervorgeht, kann das Trägerelement 43 zusammen mit der daran angeordneten Abstandsmesseinrichtung 42 in beliebigen Raumrichtungen verkippt und verschwenkt werden. Auch kann die Lage der vorliegende etwa gedachten Achsen 50, 52 beliebig verändert werden. Vorn Vorteil ist jedoch vorgesehen, wenn die beiden beliebig durch das Trägerelement zu legenden Achsen einen, etwa in Fig. 5 gezeigten Kreuzungspunkt 51 aufweisen, welcher mit einem gedachten Mittelpunkt des Referenzkörpers 40 im Wesentlichen zusammenfällt.

In der alternativen Ausgestaltung gemäß der Fig. 8 bis 12 weist der Halter 22 hingegen einen in den Fig. 8 bis 10 etwa horizontal ausgerichteten Ausleger 64 auf, welcher um seine Längsachse 50 drehbar am Halter 22 gelagert ist. An einem dem Halter 22 abgewandten Ende des Auslegers 64 ist ein weiteres Lager 66 angeordnet, dessen Lager-oder Drehachse 52 in etwa senkrecht zur ersten Achse 50 ausgerichtet ist. Über das Lager 66 ist die Abstandsmesseinrichtung 42 schließlich schwenkbar am Ausleger 64 und somit bezüglich zweier Achsen 50, 52 am Halter 22 drehbar gelagert.

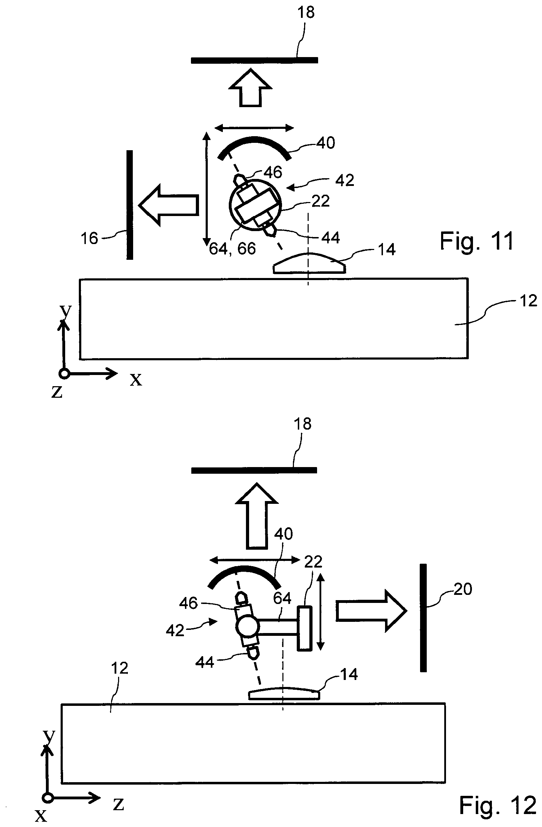

Auch hier kann, wie in den Fig. 11 und 12 dargestellt, die Abstandsmesseinrichtung 42 beliebig sowohl in der x-y-Ebene als auch in der z-y-Ebene verschwenkt werden, um stets eine Orthogonalitätsbedingung eines vom ersten oder Hauptabstandssensor 44 emittierten Messstrahls zur Objektoberfläche 15 zu ermöglichen.

Von Vorteil sind die beiden Sensoren 44, 46 der Abstandsmesseinrichtung 42 zueinander fixiert. Sie sind ferner bezogen auf die zumindest zwei Drehachsen 50, 52 im Wesentlichen diametral entgegengesetzt zueinander ausgerichtet. Eine Veränderung der Ausrichtung eines Sensors 44 geht folglich stets mit einer entsprechenden bzw. hiermit korrespondierenden Veränderung der Ausrichtung des jeweils anderen Sensors 46 einher.

Die beiden Sensoren 44, 46 sind dabei zum Messen in Reflektionsgeometrie ausgebildet. Das heißt, der zum Beispiel vom ersten Abstandssensor 44 auf den Punkt 19 der Oberfläche 15 gerichtete Messstrahl wird reflektiert und vom ersten Abstandssensor 44 wieder detektiert bzw. in den Abstandsensor 44 eingekoppelt, schließlich einer mit dem Abstandssensor 44 faseroptisch gekoppelten, in Fig. 13 angedeuteten gesonderten Sensor- bzw. Detektionseinheit 107, zugeführt.

Die Verbindung der Abstandssensoren 44, 46 als auch der Positionssensoren 72, 74, 76 kann hierbei durch eine faseroptische Kopplung mit einzelnen Detektoren 100, 102, 104, 106, 107 erreicht werden, welche unmittelbar von einer Steuer- und Auswerteeinheit 70 ausgelesen werden können. Erfährt zum Beispiel der erste Abstandssensor 44 etwa rotationsbedingt eine Verschiebung zum Beispiel in Richtung zum Objekt 14 hin, würde dies den zu messenden Abstand 24 verringern. Eine solche Verschiebung würde aber auch gleichzeitig den zweiten Abstand 48, zwischen dem gegenüberliegenden zweiten Abstandssensor 46 und der feststehenden Referenzfläche 41 quantitativ um das gleiche Maß vergrößern. Jene Verschiebung ist durch die Kopplung des Abstandssensors 46 mit der Sensor- bzw. Detektionseinheit 106 messbar.

Auf diese Art und Weise können etwaige Positionsungenauigkeiten der Abstandssensoren 44, 46 präzise vom zweiten Abstandssensor 46 durch Messung des zweiten Abstands 48 gegenüber dem mit dem ersten Punkt 19 auf der Oberfläche 15 korrespondierenden zweiten Punkt 21 auf der Referenzfläche 41 kompensiert werden.

Die Winkelstellung bzw. die sich durch das Drehen oder Verschwenken der Abstandsmesseinrichtung 42 bezüglich der Achsen 50, 52 ergebende Ausrichtung kann von der zur Bewegung der Abstandsmesseinrichtung 42 vorgesehenen Stelleinrichtung, welche vorliegend nicht gesondert gezeigt ist, erfasst und der Steuer- und Auswerteeinheit 70 zur Verfügung gestellt werden.

Die in Fig. 3 dargestellte Ausgestaltung, welche sowohl mit der in den Fig. 4 bis 7 dargestellten Hexapod-Lösung als auch mit der auf einem Ausleger 64 basierenden Implementierung des Halters als Gimball-Lösung gemäß der Fig. 8 bis 12 realisierbar ist, sieht vor, dass der Halter 22 lediglich in y-Richtung verschiebbar ausgebildet ist, während der Träger 12 in der x-z-Ebene verschiebbar angeordnet ist. Bei einer derartigen Ausgestaltung ist lediglich ein einziges zweidimensionales Referenzobjekt 18b, etwa in Form eines planaren Spiegels erforderlich, welcher zum Beispiel unterhalb des Trägers 12 angeordnet ist.

Die übrige Referenzierung bzw. die übrigen Referenzobjekte 16a, 16b, 18, 20a, 20b können hierbei als eindimensionale bzw. lineare Referenzobjekte ausgebildet sein. Durch die eindimensionale Verschiebbarkeit des Halters 22 in y-Richtung befindet sich der Halter 22 stets an ein und derselben Position bezüglich der x- und z-Richtung. Ferner kann das in y-Richtung beabstandete Referenzobjekt 18a nahezu punktförmig ausgebildet sein, da eine Abstandsmessung hier stets zu ein- und demselben Punkt erfolgt. Eine Positionsbestimmung des Trägers 12 in der x-z-Ebene kann bezüglich zweier weiterer, ebenfalls linear bzw. stabförmig ausgebildeter Referenzobjekte 20b, 16b bereitgestellt werden. Einzig für die Positionsbestimmung bzw. Positionskorrektur und Referenzierung des Trägers 12 in der y-Richtung ist ein planarer Spiegel 18b vorgesehen.

Die weiteren, eindimensionalen Referenzobjekte 16a und 20a ermöglichen eine Abstands- bzw. Positionsmessung des Halters 22 in der dargestellten x-z-Ebene. Auch ist im Unterschied zur Ausgestaltung der Fig. 2 bei der in Fig. 3 gezeigten Konfiguration nur eine Verschiebeeinheit 27 dargestellt, welche aber eine Verschiebung des Objekts 14 in der vom Träger 12 bereit gestellten Ebene (xy,z) ermöglicht. Insoweit kann die Verschiebeeinheit 27 zwei Linearverschiebeeinheiten 28, 30 aufweisen, die z.b. senkrecht zueinander angeordnet sind. Von daher sind die Funktionen der beiden in Fig. 2 gezeigten Verschiebeeinheiten 28, 30 in der Ausgestaltung gemäß Fig. 3 in der Verschiebeeinheit 27 implementiert. Ferner weist der in Fig. 3 gezeigte Träger 12 zwei ständerartige Halterungen 12a, 12b für die Verschiebeeinheit 26 bzw. für den daran angeordneten Halter 22 auf.

Das in die eindimensionalen Referenzobjekte 16a und 16b aufgeteilte Referenzobjekt 16 dient einer Bestimmung einer Relativposition von Halter 22 und Träger 12 in x-Richtung, während die Referenzobjekte 20a und 20b eine entsprechende Positionsbestimmung in z-Richtung ermöglichen. Entsprechendes gilt hier für die Referenzobjekte 18 und 20.

Im Vergleich zur Ausgestaltung gemäß Fig. 2 erfordert die Ausgestaltung nach Fig. 3 zwar die Implementierung von drei für den Halter 22 vorgesehenen Positionssensoren 72, 74, 76 sowie drei weitere, für die Positionsbestimmung des Trägers 12 ausgebildete Trägersensoren 78, 80, 82. Das Hinzufügen dreier weiterer Sensoren 78, 80, 82 kann sich jedoch herstellungs- als auch montagetechnisch gegenüber einer Ausgestaltung gemäß Fig. 2, welche drei planare Spiegel 16, 18, 20 aufweist, als vorteilhaft und kostengünstig erweisen, insbesondere was die Kalibrierung und Einrichtung der Vorrichtung 10 anbelangt.

Die am Halter 22 angeordneten Positionssensoren 72, 74, 76 dienen hierbei einer Referenzierung und damit einer Positionsbestimmung gegenüber den Referenzobjekten 16a,18a und 20a, während die Trägersensoren 78, 80, 82 zur Bestimmung entsprechender Abstände des Trägers 12, und/oder der Verschiebeeinheit 27 und damit des Objekts 14 relativ zu den Referenzobjekten 16b, 18b und 20b dienen. Die in Fig. 3 nicht explizit gezeigten Positionssensoren 72, 74, 76 sind hierbei am Halter 22 und die Trägersensoren 78, 80, 82 sind am Träger bzw. an der Verschiebeeinheit angeordnet.

In den Figuren 13 und 14 ist ferner das faseroptische Konzept schematisch dargestellt, welches der in den Fig. 1 und 2 gezeigten Messvorrichtung zugrunde liegt. Die Messvorrichtung weist im vorliegenden Ausführungsbeispiel vier Laser-Lichtquellen 90, 92, 94, 96 unterschiedlicher Wellenlänge auf. Sämtliche Lasersignale werden hierbei dem ersten und dem zweiten Mehrwellenlängen-Abstandssensor 44, 46 faseroptisch zugeführt. Mittels diesem kann nach einem Mehrwellenlängen-Messverfahren der Abstand 24 zu einem zu vermessenden Objekt 14 gemessen werden. Zumindest einer, bevorzugt sämtliche der verwendeten Laser 90, 92, 94, 96 werden auch für die übrigen Positionssensoren 72, 74, 76, bzw. Trägersensoren 78, 80, 82 verwendet.

Jeder der gezeigten Positions- bzw. Trägersensoren 72, 74, 76, 78, 80, 82 kann die in den Figuren 2 und 3 skizzierten Abstände der jeweils zugeordneten Referenzkörper 16, 18, 20 bestimmen. Die von den Sensoren 72, 74, 76, 78, 80, 82, 84 in Reflexionsgeometrie detektierten Messsignale werden faseroptisch einzelnen Detektoren 100, 102, 104, 106, 107, 108, 110, 112, 114 jeweils einzeln zugeführt, deren Signale von der Steuer-und Auswerteeinheit 70 zur Bestimmung der Oberflächentopologie 17 auswertbar sind.

Insbesondere der Haupt-Abstandssensor 44, aber sämtlichen anderen Sensoren können über den in den Figuren 13 und 14 skizzierten Multiplexer 84 mit Signalen von insgesamt vier Laserlichtquellen 90, 92, 94, 96 gespeist werden. Das ebenfalls in Reflexionsgeometrie detektierte Signal kann dabei ausgehend von den genannten Sensoren einem nicht explizit gezeigten Fasersplitter oder Demultiplexer zugeführt werden, der das detektierte und von der Oberfläche des Objekts 14 reflektierte interferrometrische Messsignal einzelnen Detektoren wellenlängenselektiv zuführen kann.

Mit einer geeigneten Auswerteelektronik, wie sie zum Beispiel aus der DE 10 2008 033 942 B3 bekannt ist, kann der Abstand 24 zwischen Abstandssensor 44 und zu vermessender Oberfläche 15 des Objekts 14 im Nanometer- oder sogar Subnanometerbereich präzise ermittelt werden.

Es wird schließlich darauf hingewiesen, dass die Anzahl und Art der hier beschriebenen Laser-Lichtquellen sowie die Anordnung einzelner Detektoren nur beispielhaft gezeigt sind. Im Rahmen der Erfindung können vielfältigste Modifikationen hinsichtlich der Art und Anzahl sowie der faseroptischen Kopplung einzelner Lichtquellen und Detektoren vorgenommen werden.

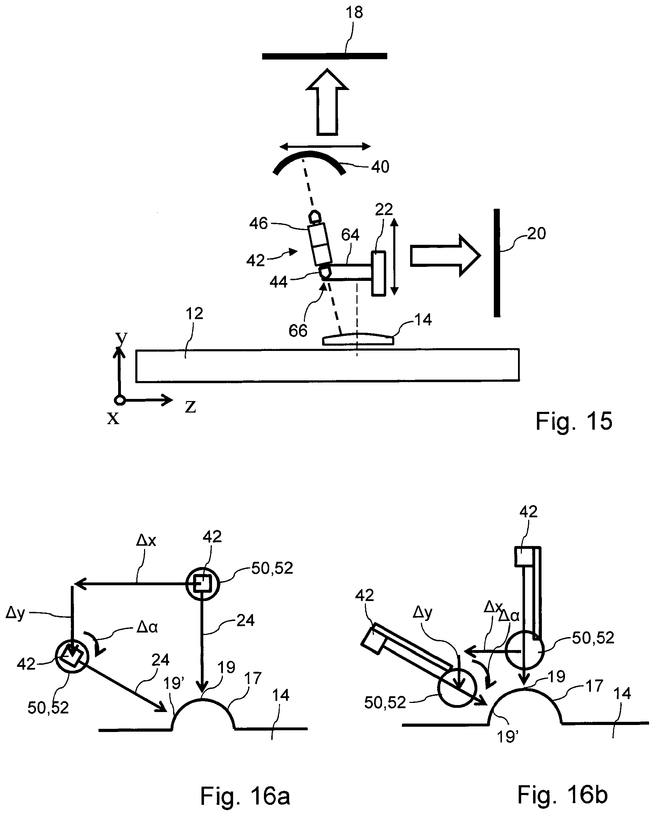

In Fig. 15 ist schließlich am Beispiel der in Fig. 12 gezeigten Konfiguration eine verschobene Sensoranordnung gezeigt. Im Unterschied zur Ausgestaltung gem. Fig. 12 sind die beiden Abstandssensoren 44, 46, mithin die gesamte Abstandsmesseinrichtung 42 dem Objekt 14 abgewandt verschoben am Halter 22 angeordnet. Es ist hierbei insbesondere vorgesehen, dass ein gedachter Mittel- oder Schwerpunkt der sich diametral entgegengesetzt ausgerichteten Abstandssensoren 44, 46 zwischen den Drehachsen 50, 52 des Halters und dem Referenzkörper 40 zu liegen kommt.

Mit anderen Worten befinden sich die Drehachsen 50, 52, um welche die Abstandsmesseinrichtung 42 drehbar gelagert ist zwischen der Abstandsmesseinrichtung 42 und dem zu vermessenden Objekt 14. Auf diese Art und Weise kann für eine die Oberfläche 17 des Objekts 14 abtastende Scannbewegung eine Optimierung erreicht werden, die anhand der beiden Figuren 16a und 16b verdeutlicht ist.

So zeigt Fig. 16a ein Messprinzip, bei welchem die Abstandsmesseinrichtung 42 in etwa mit zumindest einer der Drehachsen 50, 52 zusammenfällt. Um die Oberfläche 17 des Objekts abzutasten ist stets eine annährend senkrechtes Auftreffen des vom Sensor 44 emittierten Messstrahls erforderlich. Für die Vermessung zweier Oberflächenpunkte 19 und 19' ist daher eine Verschiebung des Halters um die Strecken ΔX und ΔY sowie eine Drehung der Abstandsmesseinrichtung 42 um einen Winkel Δα vorzusehen.

Verlagert man hingegen die Drehachsen, wie in Fig. 16b gezeigt etwas näher zum Objekt 14 hin, so ergeben sich aus den sich hiermit ändernden geometrischen Verhältnissen kürzere Verschiebestrecken ΔX und ΔY für den Halter. Da in praktischen Anwendungen das Verschieben des Halters in den Raumrichtungen X,Y,Z die Scanngeschwindigkeit der Vorrichtung begrenzt, können mit der gezeigten Verlagerung der Drehachse 50, 52 kürzere Verfahrstrecken für den Halter 22 und somit einer Verkürzung der Messzeit erreicht werden.

Insbesondere können durch geschicktes Ansteuern von Antrieben für die Verstell- und Verschiebebewegungen des Halters 22 bzw. der Abstandsmesseinrichtung 42 die Drehachsen 50, 52 sozusagen auch virtuell außerhalb des Halters 22, etwa auf die Oberfläche 17 des zu vermessenden Objekts 14 verlagert werden.

### Bezugszeichenliste

- 10: Messvorrichtung
- 12: Träger
- 14: Objekt
- 15: Oberfläche
- 16: Referenzobjekt
- 17: Oberflächenprofil
- 18: Referenzobjekt
- 19: Punkt
- 20: Referenzobjekt
- 21: Punkt
- 22: Halter
- 24: Abstand
- 26: Verschiebeeinheit
- 27: Verschiebeeinheit
- 28: Verschiebeeinheit
- 30: Verschiebeeinheit
- 40: Referenzkörper
- 41: Referenzfläche
- 42: Abstandsmesseinrichtung
- 43: Trägerelement
- 44: Abstandssensor
- 46: Abstandssensor
- 48: Abstand
- 50: Achse
- 51: Kreuzungspunkt
- 52: Achse
- 62: Aufhängung
- 64: Ausleger
- 66: Lager
- 70: Steuer- und Auswerteeinheit
- 72: Positionssensor
- 74: Positionssensor
- 76: Positionssensor
- 78: Positionssensor
- 80: Positionssensor
- 82: Positionssensor
- 84: Multiplexer
- 90: Lichtquelle
- 92: Lichtquelle
- 94: Lichtquelle
- 96: Lichtquelle
- 100: Detektor
- 102: Detektor
- 104: Detektor
- 106: Detektor
- 107: Detektor
- 108: Detektor
- 110: Detektor
- 112: Detektor
- 114: Detektor

## Patentansprüche

1. Vorrichtung zur Vermessung zumindest eines Oberflächenabschnitts (15) eines Objekts (14), mit einem Referenzkörper (40) und mit einer Abstandsmesseinrichtung (42) und mit einem Halter (22), an welchem der Referenzkörper (40) sowie die Abstandsmesseinrichtung (42) angeordnet sind, wobei die Abstandsmesseinrichtung (42) bezüglich einer ersten Achse (50) schwenkbar am Halter (22) gelagert ist, und wobei die Abstandsmesseinrichtung (42) dazu ausgebildet ist, einen ersten Abstand (24) zu einem auf dem Oberflächenabschnitt (15) des Objekts (14) befindlichen ersten Punkt (19) und einen zweiten Abstand (48) zu einem auf dem Referenzkörper (40) befindlichen zweiten Punkt (21) zu bestimmen, wobei der Referenzkörper (40) eine auf die schwenkbare Beweglichkeit der Abstandsmesseinrichtung (42) am Halter (22) abgestimmte Referenzfläche (41) aufweist, **dadurch gekennzeichnet, dass** die Abstandsmesseinrichtung (42) bezüglich der ersten und bezüglich einer zweiten Achse (52) schwenkbar am Halter (22) gelagert ist und dass die Referenzfläche (41) als sphärischer Hohlspiegel mit im Wesentlichen kugelsegmentartiger Geometrie ausgebildet ist, dessen oder deren Mittelpunkt im Wesentlichen mit der ersten und/oder mit der zweiten Achse (50, 52) zusammenfällt.

2. Vorrichtung nach Anspruch 1, ferner mit einem Träger (12) zur Aufnahme des Objekts (14), wobei der Halter (22) und der Träger (12) relativ zueinander beweglich sind.

3. Vorrichtung nach einem der vorhergehenden Ansprüche, wobei die Abstandsmesseinrichtung (42) einen zum Objekt (14) hin ausrichtbaren ersten Abstandssensor (44) und einen zweiten, zum Referenzkörper (40) hin ausrichtbaren zweiten Abstandssensor (46) aufweist.

4. Vorrichtung nach Anspruch 3, wobei der erste und der zweite Abstandssensor (44, 46) zueinander lagefixiert sind.

5. Vorrichtung nach einem der vorhergehenden Ansprüche 3 oder 4, wobei der erste und der zweite Abstandssensor (44, 46) diametral entgegengesetzt zueinander ausgerichtet sind.

6. Vorrichtung nach einem der vorhergehenden Ansprüche 3 bis 5, wobei die Abstandssensoren (44, 46) der Abstandsmesseinrichtung (42) zumindest innerhalb eines vorgegebenen, gedachten Kegelvolumens beliebig im Raum orientierbar oder ausrichtbar sind.

7. Vorrichtung nach einem der vorhergehenden Ansprüche, wobei eine gedachte Verbindungslinie des ersten Punkts (19) und des zweiten Punkts (21) einen Kreuzungspunkt (51) der ersten und der zweiten Achse (50, 52) schneidet.

8. Vorrichtung nach einem der vorhergehenden Ansprüche, wobei die Abstandsmesseinrichtung (42) über zumindest drei, bevorzugt über zumindest sechs längen- oder lageveränderliche Aufhängungen (62) am Halter (22) angeordnet ist.

9. Vorrichtung nach einem der vorhergehenden Ansprüche 1 bis 7, wobei die Abstandsmesseinrichtung (42) über ein um die zweite Achse (52) drehbar an einem Ausleger (64) angeordnetes Lager (66) am Halter (22) angeordnet ist.

10. Vorrichtung nach Anspruch 9, wobei der Ausleger (64) um die erste Achse (50) drehbar am Halter (22) gelagert ist.

11. Vorrichtung nach einem der vorhergehenden Ansprüche, wobei zumindest drei Positionssensoren (72, 74, 76) mit dem Halter (22) gekoppelt sind, mittels welchen die räumliche Position des Halters (22) in Bezug auf zumindest ein Referenzobjekt (16, 18, 20) bestimmbar ist.

12. Vorrichtung nach Anspruch 11, wobei zumindest drei Trägersensoren (78, 80, 82) vorgesehen sind, mittels welchen die räumliche Position des Trägers (12) oder einer das Objekt (14) tragenden Verschiebeeinheit (27) in Bezug auf das zumindest eine Referenzobjekt (16, 18, 20) bestimmbar ist.

13. Vorrichtung nach einem der vorhergehenden Ansprüche 3 bis 12, wobei sich die Achsen (50, 52), bezüglich welcher die Abstandsmesseinrichtung (42) drehbar gelagert ist, zwischen einer geometrischen Mitte der beiden Abstandssensoren (44, 46) der Abstandsmesseinrichtung (42) und dem zu vermessenden Objekt (14) befinden.

14. Verfahren zur Vermessung zumindest eines Oberflächenabschnitts (15) eines Objekts (14), wobei das Objekt (14) und ein Halter (22), an welchem ein Referenzkörper (40) sowie eine bezüglich einer ersten Achse (50) und bezüglich einer zweiten Achse (52) schwenkbar gelagerte Abstandsmesseinrichtung (42) angeordnet sind, in zumindest einer ersten Richtung (x, y, z) relativ zueinander bewegt werden und wobei die Abstandsmesseinrichtung (42) bezüglich beider Achsen (50, 52) verschwenkt wird, wobei der Referenzkörper (40) eine auf die schwenkbare Beweglichkeit der Abstandsmesseinrichtung (42) am Halter (22) abgestimmte Referenzfläche (41) aufweist und wobei die Referenzfläche (41) als sphärischer Hohlspiegel mit im Wesentlichen kugelsegmentartiger Geometrie ausgebildet ist, dessen oder deren Mittelpunkt im Wesentlichen mit der ersten und/oder mit der zweiten Achse (50, 52) zusammenfällt und wobei mittels der Abstandsmesseinrichtung (42) ein erster Abstand (24) zu einem ersten Punkt (19) des Oberflächenabschnitts (15) des Objekts (14) und ein zweiter Abstand (48) zu einem hiermit korrespondierenden zweiten Punkt (21) des Referenzkörpers (40) bestimmt wird.

## Claims

1. Device for measuring at least one surface section (15) of an object (14), comprising a reference body (40) and comprising a distance measuring apparatus (42) and comprising a holder (22), on which the reference body (40) and the distance measuring apparatus (42) are arranged, wherein the distance measuring apparatus (42) is mounted on the holder (22) so as to be pivotable with respect to a first axis (50), and wherein the distance measuring apparatus (42) is designed to determine a first distance (24) to a first point (19) located on the surface section (15) of the object (14) and a second distance (48) to a second point (21) located on the reference body (40), wherein the reference body (40) has a reference surface (41) matched to the pivotable mobility of the distance measuring apparatus (42) on the holder (22), **characterized in that** the distance measuring apparatus (42) is mounted on the holder (22) so as to be pivotable with respect to the first and with respect to a second axis (52), and **in that** the reference surface (41) is formed as a spherical hollow mirror with a substantially spherical segment-like geometry, of which the centre substantially coincides with the first and/or with the second axis (50, 52).

2. Device according to Claim 1, further comprising a support (12) for holding the object (14), wherein the holder (22) and the support (12) can be moved relative to each other.

3. Device according to one of the preceding claims, wherein the distance measuring apparatus (42) has a first distance sensor (44) which can be aligned with the object (14), and a second distance sensor (46) which can be aligned with the reference body (40).

4. Device according to Claim 3, wherein the first and the second distance sensor (44, 46) are fixed in position relative to each other.

5. Device according to one of the preceding Claims 3 or 4, wherein the first and the second distance sensor (44, 46) are aligned diametrically oppositely relative to each other.

6. Device according to one of the preceding Claims 3 to 5, wherein the distance sensors (44, 46) of the distance measuring apparatus (42) can be oriented or aligned as desired in space, at least within a predefined imaginary spherical cone volume.

7. Device according to one of the preceding claims, wherein an imaginary connecting line between the first point (19) and the second point (21) intersects a crossing point (51) of the first and second axes (50, 52) .

8. Device according to one of the preceding claims, wherein the distance measuring apparatus (42) is arranged on the holder (22) via at least three, preferably via at least six, variable-length or variable-position suspensions (62).

9. Device according to one of the preceding Claims 1 to 7, wherein the distance measuring apparatus (42) is arranged on the holder (22) via a bearing (66) arranged on a cantilever (64) so as to be rotatable about the second axis (52).

10. Device according to Claim 9, wherein the cantilever (64) is mounted on the holder (22) so as to be rotatable about the first axis (50).

11. Device according to one of the preceding claims, wherein at least three position sensors (72, 74, 76) are coupled to the holder (22), by means of which sensors the physical position of the holder (22) in relation to at least one reference object (16, 18, 20) can be determined.

12. Device according to Claim 11, wherein at least three support sensors (78, 80, 82) are provided, by means of which the physical position of the support (12) or a displacement unit (27) supporting the object (14) in relation to the at least one reference object (16, 18, 20) can be determined.

13. Device according to one of the preceding Claims 3 to 12, wherein the axes (50, 52) with respect to which the distance measuring apparatus (42) is rotatably mounted are located between a geometric centre of the two distance sensors (44, 46) of the distance measuring apparatus (42) and the object (14) to be measured.

14. Method for measuring at least one surface section (15) of an object (14), wherein the object (14) and a holder (22) on which a reference body (40) and a distance measuring apparatus (42) which are mounted so that they can be pivoted with respect to a first axis (50) and with respect to a second axis (52) are arranged, can be moved relative to each other in at least a first direction (x, y, z), and wherein the distance measuring apparatus (42) is pivoted with respect to both axes (50, 52), wherein the reference body (40) has a reference surface (41) matched to the pivoting mobility of the distance measuring apparatus (42) on the holder (22), and wherein the reference surface (41) is formed as a spherical hollow mirror with a substantially spherical segment-like geometry, of which the centre substantially coincides with the first and/or the second axis (50, 52), and wherein a first distance (24) to a first point (19) on the surface section (15) of the object (14) and a second distance (48) to a second point (21) corresponding thereto on the reference body (40) is determined by means of the distance measuring apparatus (42).

## Revendications

1. Ensemble pour la mesure d'au moins une partie de surface (15) d'un objet (14), l'ensemble présentant un corps de référence (40), un dispositif (42) de mesure de surface ainsi qu'un dispositif de maintien (22) sur lequel sont disposés le corps de référence (40) et le dispositif (42) de mesure de surface, le dispositif (42) de mesure de surface étant monté sur le dispositif de maintien (22) à pivotement autour d'un premier axe (50) et le dispositif (42) de mesure de surface étant configuré pour déterminer une première distance (24) par rapport à un premier point (19) situé sur la partie de surface (15) de l'objet (14) et une deuxième distance (48) par rapport à un deuxième point (21) situé sur le corps de référence (40), le corps de référence (40) présentant une surface de référence (41) accordée à la mobilité en pivotement du dispositif (42) de mesure de surface sur le dispositif de maintien (22), **caractérisé en ce que** le dispositif (42) de mesure de surface est monté sur le dispositif de maintien (22) à pivotement autour du premier axe et d'un deuxième axe (52) et **en ce que** la surface de référence (41) est configurée comme miroir sphérique creux de géométrie essentiellement du type en segment de cercle dont le centre coïncide essentiellement avec le premier et/ou avec le deuxième axe (50, 52).

2. Ensemble selon la revendication 1, présentant en outre un support (12) qui reprend l'objet (14), le dispositif de maintien (22) et le support (12) pouvant se déplacer l'un par rapport à l'autre.

3. Ensemble selon l'une des revendications précédentes, dans lequel le dispositif (42) de mesure de surface présente une première sonde de distance (44) apte à être alignée par rapport à l'objet (14) et une deuxième sonde de distance (46) apte à être alignée par rapport au corps de référence (40).

4. Ensemble selon la revendication 3, dans lequel la première et la deuxième sonde de distance (44, 46) sont immobiles l'une par rapport à l'autre.

5. Ensemble selon l'une des revendications 3 ou 4 qui précèdent, dans lequel la première et la deuxième sonde de distance (44, 46) sont alignées en opposition diamétrale l'une par rapport à l'autre.

6. Ensemble selon l'une des revendications 3 à 5 qui précèdent, dans lequel les sondes de distance (44, 46) du dispositif (42) de mesure de surface peuvent être orientées ou alignées de manière quelconque au moins à l'intérieur d'un volume conique imaginaire prédéterminé.

7. Ensemble selon l'une des revendications précédentes, dans lequel une ligne imaginaire reliant le premier point (19) au deuxième point (21) coupe un point de croisement (51) entre le premier et le deuxième axe (50, 52).

8. Ensemble selon l'une des revendications précédentes, dans lequel le dispositif (42) de mesure de surface est disposé sur le dispositif de maintien (22) par l'intermédiaire d'au moins trois et de préférence d'au moins six suspensions (62) dont la longueur ou la position sont modifiables.

9. Ensemble selon l'une des revendications 1 à 7 qui précèdent, dans lequel le dispositif (42) de mesure de surface est disposé sur le dispositif de maintien (22) par l'intermédiaire d'un palier (66) disposé sur une flèche (64) à rotation autour du deuxième axe (52).

10. Ensemble selon la revendication 9, dans lequel la flèche (64) est montée sur le dispositif de maintien (22) à rotation autour du premier axe (50).

11. Ensemble selon l'une des revendications précédentes, dans lequel au moins trois sondes de position (72, 74, 76) au moyen desquelles la position spatiale du dispositif de maintien (22) par rapport à au moins un objet de référence (16, 18, 20) sont couplées au dispositif de maintien (22).

12. Ensemble selon la revendication 11, dans lequel au moins trois sondes de support (78, 80, 82) au moyen desquelles la position spatiale relative du support (12) ou d'une unité coulissante (27) portant l'objet (14) par rapport à au moins un objet de référence (16, 18, 20) peut être déterminée sont prévues.

13. Ensemble selon l'une des revendications 1 à 7 qui précèdent, dans lequel les axes (50, 52) autour desquels le dispositif (42) de mesure de surface est monté à rotation sont situés entre le centre géométrique des deux sondes de distance (44, 46) du dispositif (42) de mesure de surface et l'objet (14) à mesurer.

14. Procédé de mesure d'au moins une partie de surface (15) d'un objet (14), dans lequel l'objet (14) et un dispositif de maintien (22) sur lequel sont disposés un corps de référence (40) ainsi qu'un dispositif (42) de mesure de surface monté à pivotement autour d'un premier axe (50) et d'un deuxième axe (52) sont déplacés l'un par rapport à l'autre dans au moins une première direction (x, y, z) et le dispositif (42) de mesure de surface est pivoté autour des deux axes (50, 52), le corps de référence (40) présentant une surface de référence (41) accordée à la mobilité en pivotement du dispositif (42) de mesure de surface sur le dispositif de maintien (22), et dans lequel la surface de référence (41) est configurée comme miroir sphérique creux de géométrie essentiellement du type en segment de cercle dont le centre coïncide essentiellement avec le premier et/ou le deuxième axe (50, 52) et dans lequel une première distance (24) par rapport à un premier point (19) situé sur la partie de surface (15) de l'objet (14) et une deuxième distance (48) par rapport à un deuxième point (21) situé sur le corps de référence (40) sont déterminées au moyen du dispositif (42) de mesure de surface.
